# EUROPEAN PATENT SPECIFICATION

(11) **EP 1 993 310 B1**
(45) Date of publication and mention of the grant of the patent: **10.08.2016**
(21) Application number: 07108388.5
(22) Date of filing: 16.05.2007
(51) Int. Cl.: H04W 8/02

(54) **Handling of reachability of multiple mobile communication units sharing the same user identification code**
Handhabung der Erreichbarkeit mehrerer Kommunikationseinheiten mit gleichem Identifizierungskode
Gestion d'accessibilité de plusieurs unités de communication qui partagent le même code d'identification

(43) Date of publication of application: 19.11.2008
(73) Proprietor: Vodafone Libertel B.V., 6221 KX Maastricht (NL)
(72) Inventor: Baltus, Guido, 6221 KX Maastricht (NL); Van Dam, Piet, 6221 KX Maastricht (NL); Vankan, Frank, 6221 KX Maastricht (NL); Oberije, Eeg, 6221 KX Maastricht (NL)
(74) Representative: V.O.

(56) References cited:
- EP-A- 0 711 090
- EP-A- 1 617 694
- EP-A1- 0 669 774
- WO-A-94/08433
- US-A1- 2004 229 601
- US-A1- 2005 075 106
- VODAFONE NL: "Duokaart - Twee identieke SIM-kaarten"[Online] 11 February 2007 (2007-02-11), XP002456074 Retrieved from the Internet: URL:http://web.archive.org/web/20070211032 847/http://www.vodafone.nl/prive/handige_d iensten/bellen_en_gebeld_worden/duokaart/> [retrieved on 2007-10-22]

## Description

The invention relates to a mobile communication network (GSM, UMTS) provided with at least one mobile services switching center (MSC), a plurality of base station controllers (BSC) which are communicatively connected with the at least one mobile services switching center (MSC) and a radio network system which is communicatively connected with the at least one mobile services switching center, wherein the network is further provided with a plurality of mobile communication units (MSE) such as mobile telephones, which are each provided with a memory module (SIM) in which a user identification code (IMSI/TMSI) is stored and which are each arranged for wirelessly communicating with the radio network system, wherein the network is further provided with at least one HLR register in which information about users of the network is stored such as the user identification codes (IMSI), associated telephone numbers (MS-ISDN) and locations of activated associated mobile communication units within the network and at least one VLR register which is associated with the at least one mobile services switching center (MSC) and in which information, such as the user identification codes (IMSI) and/or temporary user identification codes (TMSI), is stored of mobile communication units (MSE) which are activated in an area covered with the at least one mobile services switching center (MSC) and wherein a plurality of the memory modules of mobile communication units are provided with a same user identification code (IMSI) so that a plurality of mobile communication units (MSE) are present which are provided with a same user identification code (IMSI).

Such a mobile communication network is known per se by the name of GSM and UMTS. With the GSM network and with the UMTS network, the radio network system is provided with a plurality of base station controllers (BSC) which are communicatively connected with the mobile services switching center (MSC) and a plurality of base transmitting/receiving stations (BTS) which are each communicatively connected with at least one of the base station controllers (BSC). With the UMTS network, a mobile services switching center and a VLR register associated therewith is also referred to as an MSC/VLR server connected with a Media Gateway. Further, with the UMTS network, a base station controller (BSC) is also referred to as a Radio Network Controller (RNC) and, with the UMTS network, a base transmitting/receiving station (BTS) is also referred to as a Node B.

When the GSM network was set up, it was not yet provided with the possibility to issue different mobile communication units with a same telephone number (MS-ISDN). After some time, still the need arose for such a possibility. An option to be considered here is a user who wishes to carry a first mobile communication unit with him and wishes to install a second mobile communication unit in his car, both communication units being provided with a same telephone number (MS-ISDN).

When the need for such possibilities arose, it was proposed, for instance, to provide two memory modules (SIM) with a same user identification code (IMSI), this user identification code (IMSI) being coupled to an associated telephone number (MS-ISDN). An example of such an arrangement is disclosed in EP669774. The two memory modules with the same user identification code (IMSI) may then be placed in a mobile telephone (MSE) which the user carries with him and in a mobile telephone (MSE) of a car, respectively. More in general, it therefore holds that a plurality of mobile communication units are present which are provided with a same user identification code (IMSI). When a plurality of communication units are activated, however, only one is reachable. It holds, however, that both communication units can be used for transmitting information such as initiating a telephone call. This is inherent in the known network.

A problem of this known mobile communication network (GSM, UMTS) is that, when a plurality of mobile communication units (MSE) are activated with memory modules in which the same user identification code (IMSI) is stored, after which then that activated mobile communication unit (MSE) which is reachable is deactivated, the other at least one still activated mobile communication unit only becomes reachable within the network after a certain period. This problem is caused as follows. When a mobile communication unit (MSE) is activated, it transmits its user identification code (IMSI) and/or its temporary user identification code (TMSI). The transmitted signal is received by the radio network system, more in particular with the GSM network or with the UMTS network by one of the base transmitting/receiving stations (BTS). In the HLR register, in which information about the respective user identification code is stored, it is then stored through which mobile services switching center (MSC) and/or the VLR register associated therewith the activated mobile communication unit can be reached. It further holds that, in the VLR register associated with the mobile services switching center (MSC) through which the activated mobile communication unit (MSE) has been received, information is stored about through which base station controller (BSC) connected with the mobile services switching center (MSC) an activated mobile communication unit (MSE) can be reached.

A same operation takes place when then another mobile communication unit with the same user identification code is activated. Here, only the above-mentioned data of the most recently activated communication unit are stored in the HLR register. So, the data of the location (with UMTS and GSM this is a reference to the relevant VLR register in which above-mentioned information about the respective communication unit is stored) of the earlier activated communication unit with the same user identification code are overwritten in the HLR register with those of the later activated communication unit with this user identification code if this later activated communication unit is registered with another VLR register than the earlier activated communication unit. If the later activated communication unit is registered with another VLR register than the earlier activated communication unit, in the other VLR register, a record is made in which information of the later activated communication unit is stored, such as for instance user identification code (IMSI) and/or the temporary user identification code (TMSI). In the VLR register where the data of the earlier activated communication unit are stored, this information is generally erased, i.e. a record in which this information is stored is deleted. The respective communication unit has then become unreachable within the network. If, on the other hand, the later activated communication unit is registered with a same VLR register as the earlier activated communication unit, then, in that VLR register, in the record already present, information of the later activated communication unit is stored, such as for instance the user identification code (IMSI) and/or the temporary user identification code (TMSI). The earlier activated mobile communication unit has thus become unreachable within the network.

So, in the VLR register, only the data, such as the user identification code (IMSI) and/or the temporary user identification code (TMSI), of the most recently activated communication unit are stored. The data of the location and status of the earlier activated communication unit with the same user identification code are overwritten in the VLR register with those of the later activated communication unit with this user identification code when this latter communication unit is activated in an area covered by the mobile services switching center (MSC) associated with the respective VLR register. The record with the data of the location and status of the earlier activated communication with the same user identification code is erased in the VLR register when this latter communication unit is activated in an area covered by a mobile services switching center (MSC) associated with another VLR register.

When then the mobile communication unit with the respective identification code still reachable according to the network is deactivated, then it informs the network through one of the base transmitting/receiving stations (BTS) that it is switched off. The network will then indicate in the VLR register, in which the latter mobile communication unit is registered as being active, that a mobile communication unit (MSE) with the respective user identification code is no longer active. It is included in the record that the mobile communication unit is detached. Then, all other still active mobile communication units with the respective user identification code also remain unreachable within the network. This can take a considerable time as will be explained hereinafter.

This is because, with the known network, it holds that an activated mobile communication unit (MSE) transmits a signal at predetermined (relative) points in time (so-called periodic location update request) to indicate within the network that it is still activated. If the signal is, for instance, transmitted each four hours, the system may, for instance, be arranged such that when such a signal is not received for 16 hours, in the VLR register in which the respective user identification code (IMSI) and/or temporary user identification code (TMSI) was indicated being associated with an activated communication unit (MSE), it is indicated that a communication unit (MSE) with the respective (optionally temporary) user identification code (IMSI/TMSI) is no longer activated. The respective record is, for instance, erased.

If thus, by one of the other activated mobile communication units with a same user identification code as that of the mobile communication unit which was switched off earlier and which is not reachable transmits the respective signal, only then it becomes clear within the network that another mobile communication unit with the respective user identification code is active. Within the network, this is then treated as a mobile communication unit which is activated or switched on (as explained hereinabove) with the result that the respective data of the activated mobile communication unit are stored in the HLR register and in the VLR register associated with the mobile services switching center (MSC) through which the signal of the activated mobile communication unit has been received. From that moment, this communication unit is reachable. Because the activated mobile communication unit transmits the respective signal at predetermined relative points in time, for instance each four or eight hours, it may happen that the respective activated mobile communication unit is not reachable within the network up to maximally four or eight hours after the reachable communication unit is switched off. Also, the non-reachable communication unit may become reachable again when it carries out a location update request. The latter may take place when the communication unit detects that it has ended up in a different location area from the one stored in the memory module (SIM) of the respective communication unit.

US2005/75106 discloses a multiple IMSI multiple / single MSISDN system in which for a group of SIM cards various user communication preferences can be set.

EP0711090 discloses a system wherein multiple SIMs share a single IMSI and a combination of IMSI and IMEI is used to distinguish mobile stations in which the SIMs sharing the same IMSI are used.

The invention contemplates providing a solution for the above-mentioned problem that is defined in claim 1 and is characterized in that the network further comprises at least one auxiliary register in which information is stored representing the fact that a user identification code (IMSI) is stored in a plurality of memory modules (SIM) of mobile communication units (MSE), how many communication units of a collection of communication units with a same user identification code (IMSI) the collection comprises and/or are activated, with which VLR registers the activated communication units of the respective collection of communication units are registered, the user identification codes (IMSI) and/or temporary user identification codes (TMSI) associated with the activated communication units, in which location area (LAI) associated with a VLR register the activated communication units of the respective collection are registered, which of the activated communication units is reachable within the system and a communication unit identification code (IMEI) for each communication unit of a collection ,and wherein the network further comprises means, operable when a mobile communication unit (MSE) becomes switched off, to check in a step a. on the basis of the at least one auxiliary register whether a communication unit has been switched off which is part of one of the said collections and which was reachable within the system prior to this switching-off and whether the respective collection comprises another communication unit which is activated;
means to carry out in a step b. a recovery procedure if it is found by the check means in step a. that a communication unit has been switched off which is part of one of the said collections and which was reachable within the network prior to said switching off and whereof, prior to said switching off, the respective collection comprises another communication unit which is activated, the recovery procedure serving to ensure that one of the communication units of the collection which has not been switched off becomes reachable within the network;
wherein, for carrying out the recovery procedure, the network further comprises means to supply in a step c. a command Provide Roaming Number (MAP PRN) to the respective VLR register to make a record with the respective VLR register in which said information of a mobile communication unit can be stored; if the VLR register associated with the communication unit which needs to be made reachable has no record in which information about the respective communication unit is stored; means to carry out in a step d. a location update procedure so that it is registered in the HLR register that the respective communication unit which needs to be made reachable through the respective VLR register is reachable and so that, in the VLR register, a record of the respective communication unit is filled with information which causes the respective communication unit to become reachable within the network;
wherein the network is arranged such that the command Provide Roaming Number (MAP PRN) of step c. is only carried out if it has been stored in the auxiliary register that the mobile communication unit which needs to become reachable, can become reachable through a VLR register which differs from the VLR register through which the mobile communication unit was reachable which has been switched off.

The result is that, when a mobile communication unit with a particular user identification code is deactivated while at least one other mobile communication unit with the same user identification code is still active, this still active mobile communication unit becomes reachable within the network relatively quickly.

Preferably, the network is further defined as in claim 2.

This allows the known network system to be adjusted very simply to solve this problem without radical changes being necessary. This is because, by carrying out step e., use is made of properties of the known network which are already present. This is because the already known GSM-UMTS network has the property that it will carry out the steps f. and h. as a response to step e. The carrying out of the command Provide Roaming Number (MAP PRN) of step c. is also a step which can be carried out by the known GSM-UMTS network without adjustments to the network being necessary.

Further, the network is preferably further defined as in claim 3. Here, it particularly holds that the network is operable to carry out step e. on the basis of the step h. carried out.

Here, it also holds that the response of the network to the non-standard special request to Provide Subscriber Information (MAP PSI) is standard for the known GSM-UMTS network.

Another problem occurring with the known network is that, for a user owning a plurality of communication units which are provided with a same user identification code, it is not clear and predictable which of the communication units is reachable. When a plurality of such communication units are switched on, they each show, on a display of these communication units, a status as if the respective communication unit were reachable. The known network is arranged such that the communication unit which was the last to be active within the network, is reachable within the network. This activity may, for instance, consist of carrying out a location update request as a result of changing the location area in which the respective communication unit is located, carrying out a periodic location update request, switching on a communication unit, initiating the transmission of information, such as initiating a telephone call or initiating the sending of a text message. It is then clear to a user that he has transmitted a telephone call or a text message or that he has transmitted a communication unit and that he can then expect that precisely the apparatus used for this is reachable. However, it escapes the notice of a user when a communication unit carries out above-mentioned location update request as a result of a change of the location area in which the respective communication unit is located or that the communication unit carries out a periodic update request. Because the user fails to notice that such an activity takes place, it will not be clear to the user either that, in that case, the communication unit which has carried out the respective location update request as a result of the change of the location area or a periodic update request becomes reachable.

According to a special aspect of the invention, a solution for this problem is provided as well. To this end, the network according to the invention is characterized in that the communication units which are part of one of the above-mentioned collections are each provided with a special memory module (SIM) which brings about that a communication unit provided with such a special memory module (SIM) transmits a power-on signal recognizable to the network when the respective communication unit is switched on. This means that, when the network receives the power-on signal, the network knows that the respective communication unit is switched on. This is not the case with a standard GSM-UMTS network because, in a standard network, the switching on of an apparatus sometimes just looks like a normal update location, i.e. as a network event. So, this then sometimes results in a network event and sometimes this results in a so-called attach of which it is not sure whether an apparatus has actually been switched on. However, now, due to the special power-on signal, it is sure that an apparatus is switched on. The network then knows that an adjusted apparatus is involved and can therefore respond thereto.

In particular, it then holds that the network is arranged for bringing about that, of a collection of communication units comprising a same user identification code (IMSI), that communication unit becomes reachable or, when it is already reachable, remains reachable which has been switched on most recently or which has been used most recently by a user to transmit information of the user, such as initiating a telephone call and sending a text message, etc. In this manner, for the user, the simple rule holds that that communication unit of the collection of communication units is reachable which he has used most recently for transmitting information or which he has switched on most recently.

A practical embodiment is defined in claim 9.

Further elaborations are defined in claims 10 and 11.

So, it appears from this that, for carrying out step i., use can very effectively be made of the above-mentioned means that perform step c. and d. which were already used to prevent, upon switching off a communication unit which is reachable and which is provided with a particular user identification code, any of the communication units which are provided with a same user identification code and which are activated from becoming reachable.

Still further elaborations are defined in claims 12 to 19. The same advantages also hold as described hereinabove.

In particular, it holds that the power-on signal is transmitted in that, in its memory module, the communication unit overwrites the location area information (LAI) with predetermined location area information (LAIPO) which is recognized by the network as a power-on signal. It then also holds that, because the communication unit overwrites the location area information with a predetermined location area in its memory module, a response by the network is elicited which is inherent in the known network. Also, in this manner, with a minimum amount of adjustments, the known GSM-UMTS network can be improved. It then preferably holds that the transmitted power-on signal relates to the predetermined local area identity (LAIPO).

According to a practical embodiment, it further holds that, in the auxiliary register, the number of communication units of a collection is stored by storing, of each communication unit of the collection, its communication unit identification code (IMEI).

It further holds according to a practical embodiment that the at least one auxiliary register and the HLR register are integrated.

The invention will now be explained in more detail with reference to the drawing, in which:

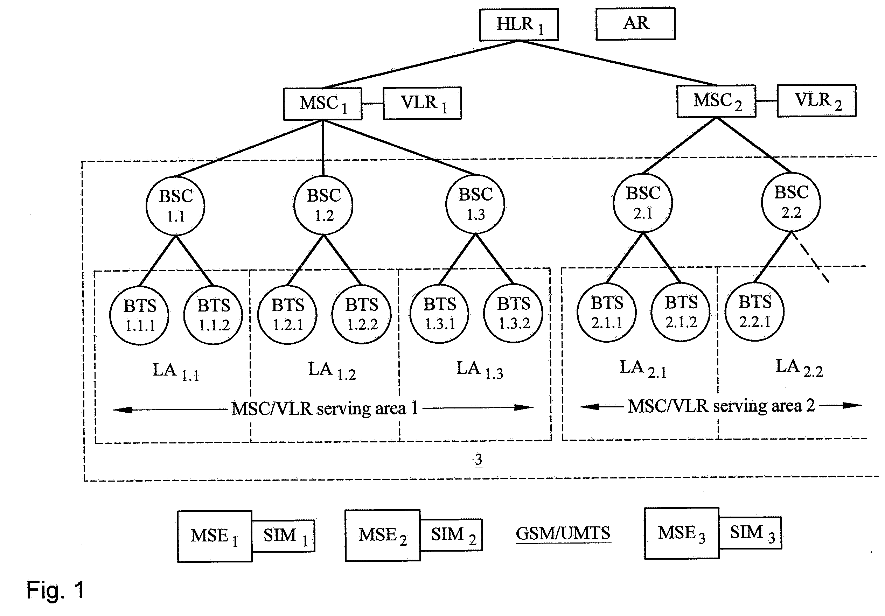

Fig. 1 shows a possible embodiment of a network according to the invention.

In Fig. 1, GSM or UMTS is understood to refer to a mobile communication network according to the invention. The network is provided with a mobile services switching center (MSC 1) and a mobile services switching center (MSC 2). The network further comprises a plurality of base station controllers (BSC 1.1, BSC 1.2, BSC 1.3) which are each communicatively connected with the mobile services switching center (MSC 1) and a plurality of base station controllers (BSC 2.1, BSC 2.2, BSC 2.3) which are each communicatively connected with the mobile services switching center (MSC 2). The mobile communication network is further provided with a plurality of base transmitting/receiving stations (BTS 1.1.1, BTS 1.1.2, BTS 1.2.1, BTS 1.2.2, BTS 1.3.1, BTS 1.3.2) which are each communicatively connected with one of the base stations (BSC 1.1, BSC 1.2 or BSC 1.3). The mobile communication network is further provided with a plurality of base transmitting/receiving stations (BTS 2.1.1, BTS 2.1.2) which are each connected with the base station (BTS 2.1) and a plurality of base transmitting/receiving stations (BTS 2.2.1, BTS 2.2.2) which are each communicatively connected with the base station (BSC 2). The base transmitting/receiving stations (BTS) and the base stations (BSC) together from a radio network system 3. In this example, the network (GSM/UMTS) further comprises a plurality of mobile communication units (MSE), such as mobile telephones, which are each provided with memory modules (SIM) in which a user identification code (IMSI) is stored. The communication units (MSE) are each arranged for wirelessly communicating with the radio network system 3. More in particular, it holds for this example that the communication units (MSE) are each arranged for wirelessly communicating with the base transmitting/receiving stations (BTS).

The mobile communication network is further provided with at least one HLR register (HLR 1) in which the information about users of the network is stored. This involves the allocated user identification codes (IMSI) of the users, the associated telephone numbers of the users (MS-ISDN) and locations of activated associated mobile communication units (MSE) within the network. In this example, it holds with regard to the location of the activated mobile communication unit that information is stored in the HLR register about through which mobile services switching center (MSC) an activated mobile communication unit (MSE) can be reached.

The mobile communication network is further provided with at least one VLR register (VLR 1) which is, in this example, associated with the mobile services switching center (MSC 1) and at least one VLR register (VLR 2) which is, in this example, associated with the mobile services switching center (MSC 2). In this example, the mobile services switching center (MSC 1) and the VLR register (VLR 1) are placed physically in each other's proximity. The same holds for the mobile services switching center (MSC 2) and the VLR register (VLR 2).

In the VLR register (VLR 1), information is stored such as the user identification code (IMSI) and/or a temporary user identification code (TMSI) of all mobile communication units (MSE) which are activated in an area (MSC/VLR service area) covered with the at least one mobile services switching center (MSC 1). In the VLR register (VLR 2), information is stored such as the user identification code (IMSI) and/or a temporary user identification code (TMSI) of all mobile communication units (MSE) which are activated in an area (MSC/VLR service area) covered with the at least one mobile services switching center (MSC 2).

So, in the HLR register, information is stored about through which mobile services switching center (MSC) a mobile communication unit (MSE) could be reached most recently. Whether the mobile communication unit is actually still activated is not know in the HLR register. By contrast, in the VLR register, information is stored about through which base control (BSC) connected with a mobile services switching center (MSC) an activated mobile communication unit (MSE) can be reached. Thus, the VLR register comprises a record for the respective activated communication unit in which, for instance, the temporary user identification code of the activated communication unit is stored. If a communication record having a record with, for instance, the VLR register (VLR 1) is deactivated, then it is also registered in the record of the VLR register (VLR 2) as being detached.

If, however, such an activated communication unit moves to an area covered by the VLR register (VLR 2), then a record is made in the VLR register (VLR 2) with information therein of the respective communication unit such as a (new) temporary user identification code (TMSI). In the HLR register, it is then indicated that the respective communication unit is reachable through the VLR register (VLR 2) and the system gives a command to erase the record of the respective communication unit in the VLR register (VLR 1). If this erasing does not succeed, then the record will be erased automatically if, for instance for seven days, no communication with the respective communication unit has occurred through the VLR register (VLR 1).

In this example, two mobile communication units (MSE 1) and (MSE 2) are each provided with a memory module (SIM 1 and SIM 2), respectively, while one and the same user identification code (IMSI) is stored in the memory modules (SIM 1 and SIM 2).

The operation of the mobile communication network described up to this point is as follows. When the mobile communication unit (MSE 1) is activated, it transmits a signal comprising *inter alia* its user identification code (IMSI). This signal is, for instance, received by the base transmitting/receiving station (BTS 1.1.1). The base transmitting/receiving station (BTS 1.1.1) passes the received signal on to the associated base station controller (BSC 1.1). This passes information about the received signal on to the mobile services switching center (MSC 1). The mobile services switching center (MSC 1) writes the respective user identification code (IMSI) in the associated VLR register (VLR 1), as well as information about through which base station (BSC 1.1.1) the information was received. To this end, in the VLR register (VLR 1), a record is made for the communication unit (MSE 1) in which this information is stored. Further, the mobile services switching center (MSC 1) passes a temporary user identification code (TMSI) on to the communication unit (MSE 1). This temporary user identification code (TMSI) is stored in the respective record of the VLR register (VLR 1) and in the communication unit (MSE 1). With the base station controller (BSC 1.1), a so-called location area (LA 1.1) is covered which is part of the MSC/VLR service area. Then, the mobile services switching center (MSC 1.1) transmits information to the HLR register about the activated communication unit. In the HLR register, it is then noted that the communication unit (MSE 1) with the user identification code (IMSI) is reachable through, in this example, the mobile services switching center (MSC 1.1). The latter involves location information of the mobile communication unit with the respective user identification code (IMSI).

If then an activated mobile communication unit (MSE 3) wants to call a telephone number (MS-ISDN) associated with the mobile communication unit (MSE 1), the mobile communication unit (MSE 3) contacts the network. The communication unit (MSE 3) then transmits the respective telephone number (MS-ISDN). This is received by one of the base transmitting/receiving stations (BTS). The network then consults the HLR register to look whether a communication unit with the user identification code IMSI which is coupled to the respective telephone number MS-ISDN is registered. In this example, it appears from the HLR register that a mobile communication unit with the respective user identification code is indeed registered. It is then verified with which mobile services switching center (MSC) the respective mobile communication unit (MSE 1) is registered. This is found to be the mobile services switching center (MSC 1). The HLR register then, in this example, requests this mobile services switching center (MSC 1) to allocate a temporary telephone number to the active user identification code (IMSI) registered in the VLR register. The mobile services switching center (MSC 1) adds a temporary telephone number (MS-RN) and this temporary telephone number (MS-RN) is then passed on to the HLR register. Then the network ensures that the request of (MSE 3) for a call is coupled to the temporary telephone number (MS-RN) after which then the mobile communication unit (MSE 3), using the temporary telephone number (MS-RN), requests the mobile services switching center (MSC 1.1) to make a connection with the mobile communication unit (MSE 1) which has the user identification code IMSI which is coupled to the temporary telephone number (MS-RN). Then a connection is realized between the mobile communication unit (MSE 1) and the mobile services switching center (MSC 1) using the temporary user identification code (TMSI). Thereby, a connection between the mobile communication unit (MSE 1) and the mobile communication unit (MSE 3) has thus been realized. When a communication can be ended, one of the two or both communication units (MSE 1 or MSE 3) can break the connection. After this, the temporarily allocated telephone number (MS-RN) is cancelled. In a similar known manner, from a fixed apparatus, a connection can be made with the mobile communication unit (MSE 1).

When then the mobile communication unit (MSE 2) is activated, it is registered within the network as discussed hereinabove for the mobile communication unit (MSE 1). In this example, it holds that the mobile communication unit (MSE 2) is located in the serving area of the mobile services switching center (MSC 1) and logs on through the base transmitting/receiving station (BTS 1.3.2). Because the mobile communication unit (MSE 2) has the same identification code as the mobile communication unit (MSE 1), the data of the mobile communication unit (MSE 1) stored in the HLR register (HLR 1) are maintained. The mobile services switching center (MSC 1) will make a new temporary user identification code and pass this on to the communication unit (MSE 2). Further, in the record for the communication unit with the respective identification code (IMSI), the information is overwritten with new information of the communication unit (MSE 2) such as the new temporary user identification code (TMSI). Thus, the communication unit (MSE 2) becomes reachable and the communication unit (MSE 1) unreachable within the network. If the mobile communication unit (MSE 2) were registered with another VLR register (VLR 2), then the information in the HLR register would also be overwritten. This is because the HLR register then needs to indicate that the communication unit (MSE 2) with the respective user identification code (IMSI) is reachable through the VLR register (VLR 2). In this example, the network is arranged such that, in the VLR register (VLR 2), a record is made for the communication unit (MSE 2). The mobile services switching center (MSC 2) generates a new temporary user identification code (TMSI) which is stored in the record of the VLR register (VLR 2) and in the communication unit (MSE 2) and which is used for communication between the communication unit (MSE 2) and the mobile services switching center (MSC 2). Further, the network will give a command to erase the record of the communication unit (MSE 1) in the VLR register (VLR 1). This is because the system as described up this point does not know that there are two communication units (MSE 1 and MSE 2) with a same user identification code (IMSI) and only 'thinks' that the communication unit (MSE 1) has been moved from an area covered by the VLR register (VLR 1) and to an area covered by the VLR register (VLR 2). It now holds that the mobile communication unit (MSE 2) is reachable within the network while this is not the case for the mobile communication unit (MSE 1). It is possible for the user to initiate a telephone call through the mobile communication unit (MSE 1) or through the mobile communication unit (MSE 2) as desired.

It further holds in above-mentioned embodiments that an activated mobile communication unit transmits a signal at predetermined (relative) points in time to indicate within the network that it is still activated while, when such a signal fails to occur, the network indicates in the VLR register in which the respective user identification code (IMSI) was indicated as being associated with an activated communication unit (MSE) that the communication unit (MSE) with the respective user identification code (IMSI) is not longer activated (practically this means that the respective information about the mobile communication unit is erased from the VLR register), while the network indicates or continues to indicate in the VLR register associated with the mobile services switching center (MSC) through which the signal has been received that the mobile communication unit (MSE) with the respective user identification code (IMSI) has indeed been activated when the respective signal is received.

An advantage is that when, for whatever reason, no signal is received from a mobile communication unit, that it is deactivated while this is still the case, the content of the respective registers is corrected after some time in that it is indicated that the respective mobile communication unit is no longer active.

The network is further provided with at least one additional auxiliary register (AR) in which information is stored representing the fact that a user identification code (IMSI) is stored in a plurality of memory modules (SIM) of mobile communication units (MSE), how many communication units of a collection of communication units with a same user identification code (IMSI) the collection comprises and/or are activated, with which VLR registers the activated communication units of the respective collection of communication units are registered, the user identification codes (IMSI) and/or temporary user identification codes (TMSI) associated with the activated communication units, in which location area (LAI) associated with a VLR register the activated communication units of the respective collection are registered and which of the activated communication units is reachable within the system. Here, the number of communication units of a collection of communication units having a same user identification code (IMSI) within a collection can be indicated by including a communication unit identification code (IMEI) per communication unit in the auxiliary register (AR).

As indicated hereinabove, the mobile communication units (MSE 1) and (MSE 2) are each activated while, however, the mobile communication unit (MSE 2) is reachable and the communication unit (MSE 1) is not reachable. When the mobile communication unit (MSE 2) is switched on, a number of steps are carried out in the network to make the communication unit (MSE 1) reachable. Here, it is assumed that the mobile communication unit (MSE 2) is switched off while both communication units (MSE 1) and (MSE 2) are activated as described hereinabove.

The following steps are then carried out.

Through one of the base transmitting/receiving stations (in this example BTS 1.1.1), the mobile communication unit (MSE 2) passes on to the network that it is switched off. In particular, this means that, in this example, it is indicated in the VLR register (VLR 1) that the respective communication unit is no longer active. The result is that the mobile communication unit (MSE 2) is no longer reachable within the network. The mobile communication unit (MSE 1) is not reachable within the network either. This is because this was not reachable within the network because the communication unit (MSE 2) was reachable within the network before it was deactivated. In order to bring about that the still activated mobile communication unit (MSE 1) becomes reachable within the network, the network carries out the following steps:
a. on the basis of the at least one auxiliary register (AR), the network checks whether a communication unit (MSE 2) is switched off which is part of one of the above-mentioned collections and which is reachable within the system and whether the respective collection comprises another communication unit which is activated;
b. If it appears from step a. that a communication unit has been switched off which is part of one of the above-mentioned collections and which was reachable within the network prior to this switching off and whereof, prior to this switching off, the respective collection comprised another communication unit which is activated, a recovery procedure is carried out which ensures that one of the communication units of the collection which has not been switched off becomes reachable within the network. In this example, it holds that the network is arranged for carrying out a recovery procedure as follows.

A step c. is carried out. This step involves that, if the VLR register associated with the communication unit which needs to be made reachable has no record in which information about the respective communication unit is stored, the network supplies a command Provide Roaming Number (MAP PRN) to the respective VLR register to make a record with the respective VLR register in which this information of a mobile communication unit such as a user identification code (IMSI) and/or temporary user identification code (TMSI) can be stored. So, when it appears from the auxiliary register that the communication unit which has been switched off, in this example the communication unit (MSE 2), is registered with a same VLR register as the at least one communication unit which is still activated, in this example the communication unit (MSE 1), in this example, the command Provide Roaming Number (MAP PRN) is not carried out. This is not necessary because, in the VLR register, then a record is already present for a communication unit with the respective user identification code. If it appears from the auxiliary register (AR) that the communication unit (MSE 2) is active and is registered with the VLR register (VLR 2), then the command Provide Roaming Number (MAP PRN) would be carried out. However, in the example given hereinabove, this command is not carried out. Incidentally, the command can be carried out in a standard manner, but because the network in this example is a GSM-UMTS network, it is only necessary to carry out this command in the case indicated hereinabove. So, it holds in this example that the command Provide Roaming Number (MAP PRN) of step c. is only carried out if it is stored in the auxiliary register that the mobile communication unit which needs to become reachable can become reachable through a VLR register which differs from the VLR register through which the mobile communication unit was reachable which has been switched off. After step c., step d. is carried out. According to step d., the network carries out a location update procedure so that it is registered in the HLR register that the respective communication unit which needs to be made reachable through the respective VLR register is reachable and so that, in the VLR register, a record of the respective communication unit is filled with information which makes the respective communication unit reachable within the network.

In this example, the network is arranged for carrying out the following steps for the above-mentioned location update according to step d.:
e. the network supplies a paging call to the respective communication unit (MSE 1) which needs to be made reachable on the basis of the information about the current location area (LAI) of the respective communication unit stored in the auxiliary memory and on the basis of the information about the user identification code (IMSI) and/or the temporary user identification code (TMSI) stored in the auxiliary memory. After this, the network carries out a step f., in which the network carries out a reallocation procedure, in this example a TMSI reallocation procedure, in which, to the respective communication unit, a predetermined location area (LAIFLU) is supplied which is then stored in its memory module (SIM). In this example, these steps are carried out by the mobile services switching center (MSC 1.1) and the associated VLR register (VLR 1) covering the area (LAI) where the respective communication unit (MSE 1) is located.

The location area given is, in this example, a location area which has a predetermined indication which, however, does not exist as a real location area. If the communication unit (MSE 1) receives the predetermined location area, it stores the location area in its memory module (SIM). The latter is a standard property of the GSM-UMTS network. Further, it is a standard property that the communication unit (MSE 1) receives information from the network about its current real location area (LAI). The communication unit (MSE 1) will then detect that it differs from the predetermined location area (LAIFLU) stored in its memory module. On the basis thereof, the communication unit (MSE 1) will carry out a standard procedure which involves that a location update request is transmitted by the communication unit (MSE 1). The result thereof is that the VLR register is updated and that the HLR register is also updated with information about through which VLR register the communication unit (MSE 1) is reachable. It is now achieved in step e. that the HLR register is updated with relevant information in order to make the communication unit (MSE 1) reachable. The result is that now the communication unit (MSE 1) is reachable within the network.

For initiating step e., use can be made of standard properties of the GSM-UMTS network. For initiating step e., the network is arranged for bringing about in a step h. that, on the basis of information from the auxiliary register, a special request to provide subscriber information (MAP PSI) is supplied to the VLR register (VLR 1) through which the communication unit (MSE 1) needs to be made reachable. The special request comprises information about the current location area (LAI) of the respective communication unit (MSE 1), the user identification code (IMSI) and/or the temporary identification code of the respective communication unit (MSE) and the predetermined location area for forced update (LAIFLU). The GSM-UMTS network has such properties that it will carry out step e. and the basis of the step h. carried out. This again involves, as said, a standard property of the GSM-UMTS network.

It is noted that the network is arranged such that the paging call is also carried out when the respective communication unit is registered as being not reachable (detached) in the respective VLR register (VLR 1). In this example, in step e., the paging call is carried out by the base transmitting/receiving stations (BTS) which are associated with at least one and the same mobile services switching center (MSC) or VLR register. However, it may also be the case that, in step e., the paging call is transmitted by those base transmitting/receiving stations (BTS) which are associated with the VLR register (VLR 1) through which, according to the information in the auxiliary register, the mobile communication unit (MSE 1) needs to be made reachable. An advantage thereof is that the paging call needs to be transmitted by a limited number of transmitting/receiving stations (BTS).

An advantage of the above-described method is that an existing GSM-UMTS network requires only minimal adjustments to be able to operate as described hereinabove. The first adjustment involves the addition of the auxiliary memory with the above-mentioned information. Further adjustments are that the network needs to carry out the steps a. and b. Further, for carrying out step c., only the command (MAP PRN) needs to be supplied to the respective VLR register and, for carrying out step d., the network only needs to be adjusted such that the network carries out the step h. On the basis of standard properties of the network, step h. initiates step e. and, on the basis of standard properties of the network, step e. initiates step d. Thus, with a minimum number of adjustments, the network can be adjusted for making above-mentioned communication unit (MSE 1) reachable. If the communication unit (MSE 1) were registered with the VLR register (VLR 2), the command (MAP PRN) should be supplied to the respective VLR register by the network.

Preferably, it holds that the network has undergone an adjustment which brings about that the communication unit of a collection of communication units which are provided which a same identification code and which has most recently been used by a user for transmitting information or has most recently been switched on becomes reachable and, when it is already reachable, remains reachable within the network. The reason for this is that is comes across as logical to a user.

However, a standard property of the GSM-UMTS network is that, when a communication unit of the above-mentioned collection carries out a so-called periodic location update request, which escapes the notice of the user, this communication unit has become reachable within the network. This also holds when a communication unit carries out a location update request because it ends up in a different location area. This respective communication unit will then detect that, in its memory module, a different location area is stored from the one he receives from the network and, as a result, a standard location update request will be carried out by the respective communication unit. Thereby this communication unit becomes reachable within the network. This needs to be prevented because, of the above-mentioned collection, the communication unit most recently used by a user for transmitting information or most recently switched on by a user is reachable but also needs to remain reachable within the network.

In this example, to this end, the communication units are provided with a special memory module which brings about that a communication unit which is provided with such a special memory module transmits a power-on signal recognizable to the network when the respective communication unit is switched on. This means that, when the network receives the power-on signal, the network knows that the respective communication unit is switched on. This is not the case with a standard GSM-UMTS network because, in a standard network, the switching on of an apparatus sometimes looks like a normal update location, i.e. as a network event. So, this then sometimes results in a network event and sometimes this results in a so-called attach of which it is not sure whether an apparatus has actually been switched on. However, now, due to the special power-on signal, it is sure that an apparatus is switched on. The network then knows that an adjusted apparatus is involved and can therefore respond thereto as will be explained hereinafter in more detail. In this example, the network is arranged for bringing about that, of a collection of communication units comprising a same user identification code (IMSI), that communication unit becomes reachable or, when it is already reachable, remains reachable which has been switched on most recently or which has been used most recently by a user to transmit information of the user, such as initiating a telephone call and sending a text message, etc. In order to determine that a communication unit has been switched on, the network checks whether the respective power-on signal has been received.

The network is further arranged for carrying out a step i. when one of the other communication units of the collection is not reachable, carries out an action which is different from an action where information is transmitted with a communication unit by the user, which is different from switching on a communication unit and which results in this communication unit undesirably becoming reachable and therefore in the communication unit which needs to be reachable because a user switched on this communication unit most recently or because is user transmitted information with this communication unit most recently becomes unreachable. The step i. then brings about that the communication unit which needs to remain reachable becomes reachable again. In other words, when a communication unit of the above-mentioned collection of communication units comprising a same identification code carries out an action whereby it becomes reachable within network, this action, however, not involving the activation of the apparatus so that a power-on signal is transmitted and this action neither being the transmission of information by the user with the aid of the communication unit, the network ensures that the communication unit which has now become unreachable but has most recently transmitted a power-on signal or has most recently been used by a user for transmitting information becomes reachable again. To this end, on the basis of the information from the auxiliary register, the network determines that step i. needs to be carried out for making the respective communication unit reachable. This is because it is indicated in the auxiliary register that, when a communication unit is involved which is provided with a collection with a plurality of communication units comprising a same identification code. It further appears from the auxiliary register which communication unit of the collection is reachable within the system. Further, the network can establish, on the basis of the contents of the auxiliary register, when another communication unit of a collection becomes reachable and whether this either is the result of a power-on event or happens because a user has transmitted information with the respective communication unit. If this is not the case, the network knows that the communication unit which was previously reachable needs to be made reachable again. The latter can be carried out again in a completely analogous manner to what was already indicated hereinabove when a communication unit was switched off of a collection while it was intended that a non-reachable but activated communication unit of the collection is made reachable. The network is arranged for carrying out step i. by means of the following steps. First of all, above-mentioned step c. is carried out. In step c., it is checked whether the communication unit which needs to be made reachable is registered with a same VLR register as the communication unit which has undesirably become reachable. In this example, it, for instance, holds that, of the collection, the communication unit (MSE 1) is reachable through the VLR register (VLR 1) while the communication unit (MSE 2) which is activated and is registered in the VLR register (VLR 2) is no longer reachable. Because, in this example, the communication unit (MSE 1) is now reachable, this means that it is indicated in the HLR register that the communication unit with the respective identification code is reachable through the VLR register (VLR 1). Here, it is assumed that now, for instance, due to a period location update carried out by the communication unit (MSE 2), this communication unit undesirably becomes reachable within the network while the communication unit (MSE 1) becomes not reachable within the network. A user will not be able to notice this directly. This change of condition will be registered in the auxiliary register. The network is arranged for recognizing this undesired situation on the basis of the change of contents and will intervene. This means that the communication unit (MSE 1) needs to be made reachable again within the network. To this end, the network will now, from step c., supply the command (MAP PRN) to the VLR register (VLR 1) to create a record with this register for the communication unit (MSE 1) with the respective user identification code. The network further carries out the above-mentioned step d. This means that the network carries out a location update procedure so that it is registered in the HLR register that the respective communication unit which needs to be made reachable again through the respective VLR register is reachable and so that, in the VLR register (VLR 1), the record of the communication unit made, in this example, in step c. is filled with information which makes the respective communication unit reachable within the network. For initiating step e., the network will carry out a step h. which involves that, on the basis of information from the auxiliary register, a special request to provide subscriber information (MAP PSI) is supplied to the VLR register (VLR 1) through which the communication unit (MSE 1) needs to be made reachable, wherein the special request comprises information about the current location area (LAI) of the respective communication unit (MSE 1), the user identification code (IMSI) and/or the temporary user identification code of the respective communication unit (MSE) and the predetermined location area for a forced update (LAIFLU). The network is arranged for then carrying out, on the basis of step h., the above-mentioned step e. which involves that the network, here the mobile services switching center (MSC 1) and the VLR register (VLR 1) supplies a paging call to the respective communication unit which needs to be made reachable on the basis of the information about the current location area (LAI) of the respective communication unit (MSE 1) stored in the auxiliary memory and on the basis of the information about the user identification code (IMSI) and/or the temporary user identification code (TMSI) stored in the auxiliary memory. As a result, a communication channel is opened between the communication unit (MSE 1) and the mobile services switching center (MSC 1) and the VLR register (VLR 1). After this, the network carries out a step f., in which the network carries out a reallocation procedure, in this example a TMSI reallocation procedure, in which, to the respective communication unit, a predetermined location area (LAIFLU) is supplied which is then stored in its memory module (SIM). The network can do this because the predetermined location area for forced update (LAIFLU) was supplied to the respective VLR register by means of a special request to provide subscriber information (MAP PSI). When, after carrying out the paging call, the reallocation procedure is started with the aim to provide the communication unit (MSE 1) with the predetermined location area (LAIFLU), the communication unit (MSE 1) will store the predetermined location area (LAIFLU) in its memory module (SIM) according to standard properties of the network. It is also standard that the respective communication unit receives information from the network about its current location area (LAI). The communication unit (MSE 1) will then detect that its current location area (LAI) differs from the predetermined location area (LAIFLU) stored in its memory module. On the basis of this detection, it will carry out a location update request as a standard procedure with the result that the HLR register is also updated with information about through which VLR register the respective communication unit is reachable. The result is that now the communication unit (MSE 1) has become reachable again within the network as is intended. The network is arranged such that the paging call is also carried out when the respective communication unit (MSE 1) is registered in the respective VLR register (VLR 1) as being non-reachable (detached). In that case, the communication unit (MSE 1) is still forced to become reachable again.

The above-mentioned power-on signal is transmitted, in this example, because the communication unit transmitting the power-on signal overwrites the location area information (LAI) in its memory module with predetermined location area information which is recognized by the network as a power-on signal. So, for transmitting a power-on signal, again use is made of standard properties of the network.

The adjustment only involves that, for transmitting the power-on signal, the communication unit overwrites the location area information (LAI) in its memory with predetermined location area information. The communication unit will then again detect that location area information it receives from the network differs from that information stored in its memory and will thus transmit the predetermined location area information (LAI PO).

In this example, it holds that each mobile services switching center is provided with a VLR register. However, this is not required. It is also possible that a single mobile services switching center (MSC) is provided with a plurality of VLR registers. In this example, it holds that the above-mentioned collection of communication units comprises two mobile communication units (MSE 1) and (MSE 2). However, this is not required. A collection may also comprise a larger number of mobile communication units. In this example, the number of communication units that a collection comprises is indicated in the auxiliary register by storing, of each communication unit of a collection, a communication unit identification code (IMEI) in the collection. However, this is not required. The number may also be indicated by a figure. Such variants are considered to fall within the framework of the invention.
It is also possible that each base station controller (BSC) is only connected with one base transmitting/receiving station (BTS) and vice versa. A mobile communication unit will generally involve a mobile telephone but may also be a computer which contacts the network using a telephone number. The radio network system may also comprise other variations than the ones discussed hereinabove on the basis of a GSM and UMTS network. Options to be considered are, for instance, WIFI and/or Bluetooth connections. Such variants are each considered to fall within the framework of the invention.

## Claims

1. A mobile communication network (GSM, UMTS) comprising:
at least one mobile services switching center (MSC);
a radio network system which is communicatively connected with the at least one mobile services switching center and comprises a plurality of mobile communication units (MSE), each having a memory module (SIM) in which a user identification code, IMSI, is stored and being arranged for
wirelessly communicating with the radio network system;
at least one HLR register in which information about users of the network is stored including the user identification codes, IMSI, associated telephone numbers, MS-ISDN, and locations of activated associated mobile communication units within the network;
at least one VLR register which is associated with the at least one mobile services switching center (MSC) and in which information, including the user identification codes, IMSI, and/or temporary identification codes , TMSI , is stored of mobile communication units (MSE) which are or have been activated in an area covered with the at least one mobile services switching center (MSC);
wherein a plurality of the memory modules of mobile communication units are provided with a same user identification code, IMSI, so that a plurality of mobile communication units (MSE) are present which are provided with a same user identification code, IMSI,
**characterized in that** the network further comprises
at least one auxiliary register in which information is stored representing the fact that a user identification code, IMSI, is stored in a plurality of memory modules (SIM) of mobile communication units (MSE), how many communication units of a collection of communication units with a same user identification code, IMSI, the collection comprises and/or are activated,
with which VLR registers the activated communication units of the respective collection of communication units are registered, the user identification codes, IMSI, and/or temporary user identification codes , TMSI, associated with the activated communication units, in which location area (LA) associated with a VLR register the activated
communication units of the respective collection are registered, which of the activated communication units is reachable within the system and a communication unit identification code, IMEI, for each communication unit of a collection, and
wherein the network further comprises means, operable when a mobile communication unit (MSE) becomes switched off, to check in a step a. on the basis of the at least one auxiliary register whether a communication unit has been switched off which is part of one of the said collections and which was reachable within the system prior to this switching-off and whether the respective collection comprises another communication unit which is activated;
means to carry out in a step b. a recovery procedure if it is found by the check means in step a. that a communication unit has been switched off which is part of one of the said collections and which was reachable within the network prior to said switching off and whereof, prior to said switching off, the respective collection comprises another communication unit which is activated, the recovery procedure serving to ensure that one of the communication units of the collection which has not been switched off becomes reachable within the network;
wherein, for carrying out the recovery procedure, the network further comprises means to supply in a step c. a command Provide Roaming Number, MAP PRN, to the respective VLR register to make a record with the respective VLR register in which said information of a mobile communication unit can be stored if the VLR register associated with the communication unit which needs to be made reachable has no record in which information about the respective communication unit is stored;
means to carry out in a step d. a location update procedure so that it is registered in the HLR register that the respective communication unit which needs to be made reachable through the respective VLR register is reachable and so that, in the VLR register, a record of the respective communication unit is filled with information which causes the respective communication unit to become reachable within the network;
wherein the network is arranged such that the command Provide Roaming Number, MAP PRN, of step c. is only carried out if it has been stored in the auxiliary register that the mobile communication unit which needs to become reachable, can become reachable through a VLR register which differs from the VLR register through which the mobile communication unit was reachable which has been switched off.

2. A network according to claim 1, wherein the means to carry out the location update procedure comprises
means to supply in a step e. a paging call to the respective communication unit which needs to be made reachable on the basis of the information about the current location area (LA) of the respective communication unit stored in the auxiliary memory and on the basis of the information about the user identification code, IMSI, and/or the temporary user identification code , TMSI, stored in the auxiliary memory;
means to carry out in a step f. after the paging call is supplied, a reallocation procedure in which, to the respective communication unit, a predetermined location area, LAIFLU, is supplied which is then stored in its memory module (SIM);
wherein the respective communication unit is arranged for receiving in a step g. information about its current location area (LA) from the network, detecting that it differs from the stored predetermined location area , LAIFLU, and carrying out a standard procedure location update request on the basis of said detection, so that the respective VLR register and also the HLR register is updated with information about through which VLR register the respective communication unit is reachable.

3. A network according to claim 2, wherein for initiating the means to supply a paging call the network further comprises means for bringing about in a step h. that, on the basis of information from the auxiliary register, a special request to provide subscriber information, MAP PSI, is supplied to the VLR register (VLR 1) through which the communication unit (MSE 1) needs to be made reachable, wherein the special request comprises information about the current location area (LA) of the respective communication unit (MSE 1), the user identification code, IMSI, and/or the temporary identification code, TMSI, of the respective communication unit (MSE) and the predetermined location area for forced update, LAIFLU.

4. A network according to claims 2 or 3, wherein the network is arranged such that the paging call is also carried out when the respective communication unit is registered as being not reachable in the respective VLR register.

5. A network according to any one of the preceding claims, wherein the radio network system is provided with a plurality of base station controllers (BSC) which are communicatively connected with the mobile services switching center (MSC) and a plurality of base transmitting/receiving stations (BTS) which are each communicatively connected with at least one of the base station controllers (BSC).

6. A network according to any one of the preceding claims 2-4 and according to claim 5, wherein the network is provided with means to transmit in step e. a paging call by those base transmitting/receiving stations (BTS) which are associated with at least one and the same mobile services switching center (MSC) or VLR register.

7. A network according to any one of claims 2-4 and according to claim 5, wherein the network is provided with means to transmit in step e. a paging call by those base transmitting/receiving stations (BTS) which are associated with that VLR register through which, according to the information in the auxiliary register, the mobile communication unit which needs to be made reachable can be reached.

8. A network according to any one of the preceding claims, wherein the communication units which are part of one of the said collections are each provided with a special memory module (SIM) which brings about that a communication unit provided with such a special memory module (SIM) transmits a power-on signal recognizable to the network when the respective communication unit is switched on.

9. A network according to claim 8, wherein the network is arranged such that a communication unit of a collection of communication units comprising a same user identification code, IMSI, which has been used most recently by a user to transmit information of the user or has most recently been switched on becomes reachable or when it is already reachable remains reachable within the network by a means to carry out a step i., said means to carry out a step i. being operable, when one of the other communication units of the collection is not reachable, carries out an action which is different from an action where information is transmitted by the user, which is different from an action where a communication unit is switched on and which results in this other communication undesirably becoming reachable, while said communication unit that needs to be reachable because it was switched on most recently or because it was used most recently becomes unreachable, to perform step c. and step d. in respect of the said communication unit, thereby making said communication unit, which needed to remain reachable, reachable again.

10. A network according to claim 9, wherein, on the basis of the information from the auxiliary register, the network is provided with means to determine that step i. needs to be carried out for making the respective communication unit reachable.

11. A network according to claim 9 or 10, wherein said means to supply a command Provide Roaming Number, MAP PRN, and said means to carry out a location update procedure are operable in the performance of step i.

12. A network according to claim 11, wherein, in respect of carrying out step i., the network is further arranged such that said means to supply a command Provide Roaming Number, MAP PRN, is only operable if it has been stored in the auxiliary register that the mobile communication unit which needs to become reachable, can become reachable through a VLR register which differs from the VLR register through which the mobile communication unit was reachable which has been switched off.

13. A network according to claim 11 or 12, when dependent on claim 2, wherein, in the performance of step i., said means to supply a paging call and said means to carry out a reallocation procedure are operable, and wherein the respective communication unit is arranged for receiving information about its current location area (LA) from the network, detecting that it differs from the stored predetermined location area , LAIFLU, and carrying out a standard procedure location update request on the basis of said detection, so that the respective VLR register and also the HLR register is updated with information about through which VLR register the respective communication unit is reachable.

14. A network according to claim 13, when dependent on claim 3, wherein, for initiating the means to supply a paging call said means for bringing about a special request is operable in the performance of step i.

15. A network according to any one of claims 13 or 14, wherein, in the performance of step i., the network is arranged such that the paging call is also carried out when the respective communication unit is registered as being not reachable in the respective VLR register.

16. A network according to claim 5 and according to any one of claims 13-15, wherein said means to supply a paging call comprises those base transmitting/receiving stations (BTS) which are associated with at least one and the same mobile services switching center (MSC) or VLR register.

17. A network according to claim 5 and according to any one of claims 13-15, wherein said means to supply a paging call comprises those base transmitting/receiving stations (BTS) which are associated with that VLR register through which, according to the information in the auxiliary register, the mobile communication unit which needs to be made reachable can be reached.

18. A network according to any one of claims 8-17, wherein a power-on signal is transmitted in that, in its memory module, the communication unit overwrites the location area information, LAI, with predetermined location area information, LAIPO, which is recognized by the network as a power-on signal.

19. A network according to any one of claims 8-18, wherein the transmitted power-on signal relates to the predetermined local area identity , LAIPO

20. A network according to any one of claims 8-19, wherein, in the network, on the basis of the number of communication unit identification codes, IMEI, or the number of temporary user identification code, TMSI the number of communication units which are part of a collection is determined.

21. A network according to any one of claims 8-20, wherein each special local memory module (SIM) is arranged for overwriting an actual local area identity (LA) stored in the module with the predetermined local area identity code, LAIPO, for transmitting the power-on signal.

22. A network according to any one of the preceding claims, wherein, in the HLR register, information is stored through which mobile services switching center (MSC) a mobile communication unit (MSE) could be reached most recently.

23. A network according to claim 5, wherein, in the VLR register, information is stored through which base station controller (BSC) which is connected with a mobile services switching center (MSC) an activated mobile communication unit (MSE) can be reached.

24. A network according to claim 5, wherein, when a mobile communication unit (MSE) is activated, it transmits its user identification code, IMSI, and/or temporary user identification code, TMSI, wherein the network stores in the VLR register associated with the mobile services switching center (MSC) connected with the base station controller (BSC) through which the, optionally temporary, user identification code has been received that a communication unit (MSE) with the respective, optionally temporary, user identification code, IMSI, TMSI, has been activated.

25. A network according to claim 24, wherein it is also stored in the VLR register through which base station controller (BSC), which is connected with a mobile services switching center (MSC), that the activated mobile communication unit (MSE) can be reached.

26. A network according to any one of the preceding claims, wherein an activated mobile communication unit (MSE) transmits a signal at predetermined (relative) points in time to indicate within the network that it is still activated and wherein, when such a signal fails to occur, the network indicates in the HLR register that the communication unit (MSE) with the respective user identification code, IMSI, is not longer activated and wherein the network indicates or continues to indicate in the HLR register that the mobile communication unit (MSE) with the respective user identification code has indeed been activated and is reachable when the respective signal is received.

27. A network according to any one of the preceding claims, wherein an activated mobile communication unit (MSE) transmits a signal at predetermined, relative, points in time to indicate within the network that it is still activated and wherein, when such a signal fails to occur for a predetermined period, the network indicates in the VLR register in which the respective user identification code, IMSI, and/or temporary user identification code, TMSI, was indicated as being associated with an activated communication unit (MSE) that the communication unit (MSE) with the respective user identification code, IMSI, and/or temporary user identification code, TMSI, is not longer activated and wherein the network indicates or continues to indicate in the VLR register associated with the mobile services switching center (MSC) through which the signal has been received that the mobile communication unit (MSE) with the respective user identification code, IMSI, and/or temporary user identification code, TMSI, has indeed been activated and is reachable when the respective signal is received.

28. A network according to any one of the preceding claims, wherein each mobile services switching center (MSC) is provided with a VLR register.

29. A network according to any one of the preceding claims, wherein at most two mobile communication units (MSE) are present which are provided with a same user identification code, IMSI.

30. A network according to any one of the preceding claims, wherein, in the auxiliary register, the number of communication units of a collection is stored by storing, of each communication unit of the collection, its communication unit identification code, IMEI.

31. A network according to any one of the preceding claims, wherein the at least one auxiliary register and the HLR register are integrated.

## Patentansprüche

1. Mobiles Kommunikationsnetz (GSM, UMTS), das Folgendes umfasst:
wenigstens eine Funkvermittlungsstelle (MSC);
ein Funknetzsystem, das mit der wenigstens einen Funkvermittlungsstelle kommunikativ verbunden ist und mehrere mobile Kommunikationseinheiten (MSE) umfasst, die jeweils ein Speichermodul (SIM) haben, in dem ein Benutzeridentifikationscode IMSI gespeichert und zum drahtlosen Kommunizieren mit dem Funknetzsystem ausgelegt ist;
wenigstens ein HLR-Register, in dem Informationen über Benutzer des Netzwerks einschließlich der Benutzeridentifikationscodes IMSI, der assoziierten Telefonnummern MS-ISDN und Orte von aktivierten assoziierten mobilen Telekommunikationseinheiten in dem Netzwerk gespeichert sind;
wenigstens ein VLR-Register, das mit der wenigstens einen Funkvermittlungsstelle (MSC) assoziiert ist und in dem Informationen, einschließlich der Benutzeridentifikationscodes IMSI und/oder temporärer Identifikationscodes TMSI, über mobile Kommunikationseinheiten (MSE) gespeichert sind, die in einem mit der wenigstens einen Funkvermittlungsstelle (MSC) abgedeckten Bereich aktiviert wurden oder nicht;
wobei mehrere der Speichermodule von mobilen Kommunikationseinheiten mit einem selben Benutzeridentifikationscode IMSI versehen sind, so dass mehrere mobile Kommunikationseinheiten (MSE) vorliegen, die mit einem selben Benutzeridentifikationscode IMSI versehen werden,
**dadurch gekennzeichnet, dass** das Netzwerk ferner Folgendes umfasst:
wenigstens ein Nebenregister, in dem Informationen gespeichert sind, die die Tatsache repräsentieren, dass ein Benutzeridentifikationscode IMSI in mehreren Speichermodulen (SIM) von mobilen Kommunikationseinheiten (MSE) gespeichert ist, wie viele Kommunikationseinheiten einer Sammlung von Kommunikationseinheiten mit einem selben Benutzeridentifikationscode IMSI die Sammlung umfasst und/oder aktiviert sind, bei welchen VLR-Registern die aktivierten Kommunikationseinheiten der jeweiligen Sammlung von Kommunikationseinheiten registriert sind, die mit den aktivierten Kommunikationseinheiten assoziierten Benutzeridentifikationscodes IMSI und/oder temporären Benutzeridentifikationscodes TMSI, in welchem mit einem VLR-Register assoziierten Ortsbereich (LA) die aktivierten Kommunikationseinheiten der jeweiligen Sammlung registriert sind, welche der aktivierten Kommunikationseinheiten innerhalb des Systems erreichbar sind, und einen Kommunikationseinheitsidentifikationscode IMEI für jede Kommunikationseinheit einer Sammlung, und
wobei das Netzwerk ferner Mittel umfasst, die betrieben werden können, wenn eine mobile Kommunikationseinheit (MSE) abgeschaltet wird, zum Prüfen in einem Schritt a. auf der Basis des wenigstens einen Nebenregisters, ob eine Kommunikationseinheit ausgeschaltet wurde, die Teil von einer der genannten Sammlungen ist und die innerhalb des Systems vor dieser Abschaltung erreichbar waren, und ob die jeweilige Sammlung eine andere Kommunikationseinheit umfasst, die aktiviert ist;
Mittel zum Durchführen, in einem Schritt b., eines Recovery-Verfahrens, wenn das Prüfmittel in Schritt a. feststellt, dass eine Kommunikationseinheit ausgeschaltet wurde, die Teil von einer der genannten Sammlungen ist und die innerhalb des Netzwerks vor dem Abschalten erreichbar war, und wobei, vor dem genannten Abschalten, die jeweilige Sammlung eine andere Kommunikationseinheit umfasst, die aktiviert ist, wobei das Recovery-Verfahren zum Gewährleisten dient, dass eine der Kommunikationseinheiten der Sammlung, die nicht abgeschaltet wurde, innerhalb des Netzwerks erreichbar wird;
wobei zum Durchführen des Recovery-Verfahrens das Netzwerk ferner Mittel zum Zuführen, in einem Schritt c., eines Befehls Provide Roaming Number, MAP PRN, zum jeweiligen VLR-Register umfasst, um einen Datensatz mit dem jeweiligen VLR-Register herzustellen, in dem die genannten Informationen einer mobilen Kommunikationseinheit gespeichert werden können, wenn das VLR-Register, das mit der Kommunikationseinheit assoziiert ist, die erreichbar zu machen ist, keinen Datensatz hat, in dem Informationen über die jeweilige Kommunikationseinheit gespeichert sind;
Mittel zum Durchführen, in einem Schritt d., eines Location-Update-Verfahrens, so dass in dem HLR-Register registriert wird, dass die jeweilige Kommunikationseinheit, die durch das jeweilige VLR-Register erreichbar zu machen ist, erreichbar ist, und so dass, in dem VLR-Register, ein Datensatz der jeweiligen Kommunikationseinheit mit Informationen ausgefüllt wird, die bewirken, dass die jeweilige Kommunikationseinheit innerhalb des Netzwerks erreichbar wird;
wobei das Netzwerk so angeordnet ist, dass der Befehl Provide Roaming Number, MAP PRN, von Schritt c. nur dann durchgeführt wird, wenn in dem Nebenregister gespeichert wurde, dass die mobile Kommunikationseinheit, die erreichbar werden muss, durch ein VLR-Register erreichbar werden kann, das sich von dem VLR-Register unterscheidet, durch das die mobile Kommunikationseinheit erreichbar war, als sie abgeschaltet wurde.

2. Netzwerk nach Anspruch 1, wobei das Mittel zum Durchführen des Location-Update-Verfahrens Folgendes umfasst:
Mittel zum Zuführen, in einem Schritt e., eines Paging-Rufs an die jeweilige Kommunikationseinheit, die erreichbar zu machen ist, auf der Basis der Informationen über den aktuellen Ortsbereich (LA) der jeweiligen in dem Nebenspeicher gespeicherten Kommunikationseinheit und auf der Basis der Informationen über den Benutzeridentifikationscode IMSI und/oder den temporären Benutzeridentifikationscode TMSI, im Nebenspeicher gespeichert;
Mittel zum Durchführen, in einem Schritt f., nach dem Zuführen eines Paging-Rufs, eines Neuzuordnungsverfahrens, in dem der jeweiligen Kommunikationseinheit ein vorbestimmter Ortsbereich LAIFLU zugeführt wird, der dann in seinem Speichermodul (SIM) gespeichert wird;
wobei die jeweilige Kommunikationseinheit zum Empfangen, in einem Schritt g., von Informationen über ihren aktuellen Ortsbereich (LA) von dem Netzwerk ausgelegt ist,
Erkennen, dass er sich von dem gespeicherten vorbestimmten Ortsbereich LAIFLU unterscheidet, und Durchführen einer Standardprozedur-Location-Update-Anforderung auf der Basis der genannten Erkennung, so dass das jeweilige VLR-Register und auch das HLR-Register mit Informationen darüber aktualisiert werden, durch welches VLR-Register die jeweilige Kommunikationseinheit erreichbar ist.

3. Netzwerk nach Anspruch 2, wobei zum Einleiten des Mittels zum Zuführen eines Paging-Rufs das Netzwerk ferner Mittel umfasst, um in einem Schritt h. zu bewirken, dass auf der Basis von Informationen von dem Nebenregister eine spezielle Anforderung zum Bereitstellen von Teilnehmerinformationen, MAP PSI, dem VLR-Register (VLR 1) zugeführt werden, durch das die Kommunikationseinheit (MSE 1) erreichbar zu machen ist, wobei die Spezialanforderung Informationen über den aktuellen Ortsbereich (LA) der jeweiligen Kommunikationseinheit (MSE 1), des Benutzeridentifikationscode IMSI und/oder des temporären Identifikationscode TMSI der jeweiligen Kommunikationseinheit (MSE) und den vorbestimmten Ortsbereich für ein Zwangs-Update LAIFLU beinhaltet.

4. Netzwerk nach Anspruch 2 oder 3, wobei das Netzwerk so ausgelegt ist, dass der Paging-Ruf auch durchgeführt wird, wenn die jeweilige Kommunikationseinheit als im jeweiligen VLR-Register nicht erreichbar registriert ist.

5. Netzwerk nach einem der vorherigen Ansprüche, wobei das Funknetzsystem mit mehreren Basisstationsreglern (BSC) versehen ist, die mit der Funkvermittlungsstelle (MSC) und mehreren Sende-/Empfangsbasisstationen (BTS) kommunikativ verbunden sind, die jeweils mit wenigstens einem der Basisstationsregler (BSC) kommunikativ verbunden sind.

6. Netzwerk nach einem der vorherigen Ansprüche 2-4 und nach Anspruch 5, wobei das Netzwerk mit Mitteln zum Senden, in Schritt e., eines Paging-Rufs durch diejenigen Sende-/Empfangsbasisstationen (BTS) versehen ist, die mit wenigstens einer/m und der/demselben Funkvermittlungsstelle (MSC) oder VLR-Register assoziiert sind.

7. Netzwerk nach einem der vorherigen Ansprüche 2-4 und nach Anspruch 5, wobei das Netzwerk mit Mitteln zum Senden, in Schritt e., eines Paging-Rufs durch diejenigen Sende-/Empfangsbasisstationen (BTS) versehen ist, die mit dem VLR-Register assoziiert sind, durch das, gemäß den Informationen im Nebenregister, die mobile Kommunikationseinheit, die erreichbar zu machen ist, erreicht werden kann.

8. Netzwerk nach einem der vorherigen Ansprüche, wobei die Kommunikationseinheiten, die Teil von einer der genannten Sammlungen sind, jeweils mit einem speziellen Speichermodul (SIM) versehen sind, das bewirkt, dass eine mit einem solchen speziellen Speichermodul (SIM) versehene Kommunikationseinheit ein Einschaltsignal sendet, das für das Netzwerk erkennbar ist, wenn die jeweilige Kommunikationseinheit eingeschaltet wird.

9. Netzwerk nach Anspruch 8, wobei das Netzwerk so ausgelegt ist, dass eine Kommunikationseinheit einer Sammlung von Kommunikationseinheiten, die einen selben Benutzeridentifikationscode IMSI umfasst, der zuletzt von einem Benutzer zum Senden von Informationen des Benutzers benutzt wurde oder zuletzt eingeschaltet wurde, erreichbar wird oder, wenn er bereits erreichbar ist, innerhalb des Netzwerks für ein Mittel zum Durchführen eines Schritts i. erreichbar bleibt, wobei das genannte Mittel zum Durchführen eines Schrittes i. die Aufgabe hat, wenn eine der anderen Kommunikationseinheiten der Sammlung nicht erreichbar ist, eine Aktion durchzuführen, die sich von einer Aktion unterscheidet, in der Informationen vom Benutzer gesendet werden, die sich von einer Aktion unterscheidet, in der eine Kommunikationseinheit eingeschaltet wird, und die in dieser anderen Kommunikation unerwünschterweise erreichbar wird, während die genannte Kommunikationseinheit, die erreichbar sein muss, weil sie zuletzt eingeschaltet wurde oder weil sie zuletzt benutzt wurde, Schritt c. und Schritt d. in Bezug auf die genannte Kommunikationseinheit durchzuführen, damit die genannte Kommunikationseinheit, die erreichbar bleiben muss, wieder erreichbar wird.

10. Netzwerk nach Anspruch 9, wobei das Netzwerk auf der Basis der Informationen von dem Nebenregister mit Mitteln versehen wird, um zu ermitteln, dass Schritt i. durchgeführt werden muss, um die jeweilige Kommunikationseinheit erreichbar zu machen.

11. Netzwerk nach Anspruch 9 oder 10, wobei das genannte Mittel zum Zuführen eines Befehls Provide Roaming Number, MAP PRN, und das genannte Mittel zum Durchführen eines Location-Update-Verfahrens beim Durchführen von Schritt i. betrieben werden können.

12. Netzwerk nach Anspruch 11, wobei das Netzwerk in Bezug auf die Durchführung von Schritt i. ferner so ausgelegt ist, dass das genannte Mittel zum Zuführen eines Befehls Provide Roaming Number, MAP PRN, nur dann betrieben werden kann, wenn im Nebenregister gespeichert wurde, dass die mobile Kommunikationseinheit, die erreichbar zu machen ist, durch ein VLR-Register erreichbar gemacht werden kann, das sich von dem VLR-Register unterscheidet, durch das die mobile Kommunikationseinheit erreichbar war, die ausgeschaltet wurde.

13. Netzwerk nach Anspruch 11 oder 12 in Abhängigkeit von Anspruch 2, wobei beim Durchführen von Schritt i. das genannte Mittel zum Zuführen eines Paging-Rufs und das genannte Mittel zum Durchführen eines Neuzordnungsverfahrens betrieben werden können, und wobei die jeweilige Kommunikationseinheit zum Empfangen von Informationen über ihren aktuellen Ortsbereich (LA) von dem Netzwerk, zum Erkennen, dass er sich von dem gespeicherten vorbestimmten Ortsbereich LAIFLU unterscheidet, und zum Durchführen einer Standardprozedur-Location-Update-Anforderung auf der Basis der genannten Erkennung ausgelegt ist, so dass das jeweilige VLR-Register sowie das HLR-Register mit Informationen darüber aktualisiert werden, durch welches VLR-Register die jeweilige Kommunikationseinheit erreichbar ist.

14. Netzwerk nach Anspruch 13 in Abhängigkeit von Anspruch 3, wobei zum Initiieren des Mittels zum Zuführen eines Paging-Rufs das genannte Mittel zum Bewirken einer speziellen Anforderung bei der Durchführung von Schritt i. betätigt werden kann.

15. Netzwerk nach Anspruch 13 oder 14, wobei das Netzwerk beim Durchführen von Schritt i. so ausgelegt ist, dass der Paging-Ruf auch durchgeführt wird, wenn die jeweilige Kommunikationseinheit als im jeweiligen VLR-Register nicht erreichbar registriert ist.

16. Netzwerk nach Anspruch 5 und nach einem der Ansprüche 13-15, wobei das genannte Mittel zum Zuführen eines Paging-Rufs diejenigen Sende-/Empfangsbasisstationen (BTS) umfasst, die mit wenigstens einer/m und der/demselben Funkvermittlungsstelle (MSC) oder VLR-Register assoziiert sind.

17. Netzwerk nach Anspruch 5 und nach einem der Ansprüche 13-15, wobei das genannte Mittel zum Zuführen eines Paging-Rufs diejenigen Sende-/Empfangsbasisstationen (BTS) umfasst, die mit dem VLR-Register assoziiert sind, durch das, gemäß den Informationen im Nebenregister, die mobile Kommunikationseinheit, die erreichbar zu machen ist, erreicht werden kann.

18. Netzwerk nach einem der Ansprüche 8-17, wobei ein Einschaltsignal gesendet wird, indem die Kommunikationseinheit, in ihrem Speichermodul, die Ortsbereichinformationen LAI mit vorbestimmten Ortsbereichsinformationen LAIPO überschrieben wird, die von dem Netzwerk als Einschaltsignal erkannt werden.

19. Netzwerk nach einem der Ansprüche 8-18, wobei sich das gesendete Einschaltsignal auf die vorbestimmte Ortsbereichsidentität LAIPO bezieht.

20. Netzwerk nach einem der Ansprüche 8-19, wobei in dem Netzwerk, auf der Basis der Anzahl von Kommunikationseinheitsidentifikationscodes IMEI oder der Anzahl von temporären Benutzeridentifikationscodes TMSI, die Anzahl von Kommunikationseinheiten bestimmt wird, die Teil einer Sammlung sind.

21. Netzwerk nach einem der Ansprüche 8-20, wobei jedes spezielle lokale Speichermodul (SIM) zum Überschreiben einer in dem Modul gespeicherten tatsächlichen Ortsbereichsidentität (LA) mit dem vorbestimmten Ortsbereichsidentitätscode LAIPO zum Senden des Einschaltsignals ausgelegt ist.

22. Netzwerk nach einem der vorherigen Ansprüche, wobei in dem HLR-Register Informationen darüber gespeichert sind, über welche Funkvermittlungsstelle (MSC) eine mobile Kommunikationseinheit (MSE) zuletzt erreicht werden konnte.

23. Netzwerk nach Anspruch 5, wobei in dem VLR-Register Informationen darüber gespeichert werden, über welchen Basisstationsregler (BSC), der mit einer Funkvermittlungsstelle (MSC) verbunden ist, eine aktivierte mobile Kommunikationseinheit (MSE) erreicht werden kann.

24. Netzwerk nach Anspruch 5, wobei eine mobile Kommunikationseinheit (MSE), wenn sie aktiviert wird, ihren Benutzeridentifikationscode IMSI und/oder ihren temporären Benutzeridentifikationscode TMSI sendet, wobei das Netzwerk in dem VLR-Register, das mit der Funkvermittlungsstelle (MSC) assoziiert ist, die mit dem Basisstationsregler (BSC) verbunden ist, durch den der optional temporäre Benutzeridentifikationscode empfangen wurde, speichert, dass eine Kommunikationseinheit (MSE) mit dem jeweiligen optional temporären Benutzeridentifikationscode IMSI, TMSI, aktiviert wurde.

25. Netzwerk nach Anspruch 24, wobei in dem VLR-Register auch gespeichert wird, durch welchen Basisstationsregler (BSC), der mit einer Funkvermittlungsstelle (MSC) verbunden ist, die aktivierte mobile Kommunikationseinheit (MSE) erreicht werden kann.

26. Netzwerk nach einem der vorherigen Ansprüche, wobei eine aktive mobile Kommunikationseinheit (MSE) ein Signal zu einem vorbestimmten (relativen) Zeitpunkt sendet, um in dem Netzwerk anzuzeigen, dass sie noch aktiviert ist, und wobei, wenn ein solches Signal nicht auftritt, das Netzwerk im HLR-Register anzeigt, dass die Kommunikationseinheit (MSE) mit dem jeweiligen Benutzeridentifikationscode IMSI nicht mehr aktiviert ist, und wobei das Netzwerk in dem HLR-Register anzeigt oder weiter anzeigt, dass die mobile Kommunikationseinheit (MSE) mit dem jeweiligen Benutzeridentifikationscode in der Tat aktiviert wurde und erreichbar ist, wenn das jeweilige Signal empfangen wird.

27. Netzwerk nach einem der vorherigen Ansprüche, wobei eine aktivierte mobile Kommunikationseinheit (MSE) ein Signal zu einem vorbestimmten, relativen, Zeitpunkt sendet, um in dem Netzwerk anzuzeigen, dass sie noch aktiviert ist, und wobei, wenn ein solches Signal für eine vorbestimmte Periode nicht auftritt, das Netzwerk im VLR-Register, in dem der jeweilige Benutzeridentifikationscode IMSI und/oder temporäre Benutzeridentifikationscode TMSI als mit einer aktivierten Kommunikationseinheit (MSE) assoziiert angezeigt wurde, anzeigt, dass die Kommunikationseinheit (MSE) mit dem jeweiligen Benutzeridentifikationscode IMSI und/oder temporären Benutzeridentifikationscode TMSI nicht mehr aktiviert ist, und wobei das Netzwerk im VLR-Register, das mit der Funkvermittlungsstelle (MSC) assoziiert ist, durch die das Signal empfangen wurde, anzeigt oder weiter anzeigt, dass die mobile Kommunikationseinheit (MSE) mit dem jeweiligen Benutzeridentifikationscode IMSI und/oder temporären Benutzeridentifikationscode TMSI in der Tat aktiviert wurde und erreichbar ist, wenn das jeweilige Signal empfangen wird.

28. Netzwerk nach einem der vorherigen Ansprüche, wobei jede Funkvermittlungsstelle (MSC) mit einem VLR-Register versehen ist.

29. Netzwerk nach einem der vorherigen Ansprüche, wobei höchstens zwei mobile Kommunikationseinheiten (MSE) vorliegen, die mit einem selben Benutzeridentifikationscode IMSI versehen sind.

30. Netzwerk nach einem der vorherigen Ansprüche, wobei im Nebenregister die Anzahl von Kommunikationseinheiten einer Sammlung durch Speichern, über jede Kommunikationseinheit der Sammlung, ihres Kommunikationseinheitsidentifikationscode IMEI gespeichert wird.

31. Netzwerk nach einem der vorherigen Ansprüche, wobei das wenigstens eine Nebenregister und das HLR-Register integriert sind.

## Revendications

1. Réseau de communications mobiles (GSM, UMTS) comprenant :
au moins un centre de commutation de services mobiles (MSC) ;
un système de réseau radio qui est connecté pour communiquer avec l'au moins un centre de commutation de services mobiles et qui comprend une pluralité d'unités de communication mobiles (MSE), ayant chacune un module de mémoire (SIM) dans lequel un code d'identification d'utilisateur, IMSI, est mémorisé et étant agencée pour communiquer en mode sans fil avec le système de réseau radio ;
au moins un enregistreur HLR dans lequel des informations sur les utilisateurs du réseau sont mémorisées notamment les codes d'identification d'utilisateur, IMSI, des numéros de téléphone associés, MS-ISDN, et des emplacements d'unités de communication mobiles associées activées dans le réseau :
au moins un enregistreur VLR qui est associé à l'au moins un centre de commutation de services mobiles (MSC) et dans lequel des informations, notamment les codes d'identification d'utilisateur, IMSI, et/ou des codes d'identification temporaires, TMSI, des unités de communication mobiles (MSE) qui sont activées ou qui ont été activées dans une zone couverte par l'au moins un centre de commutation de services mobiles (MSC) sont mémorisées ;
dans lequel une pluralité des modules de mémoire d'unités de communication mobiles reçoit un même code d'identification d'utilisateur, IMSI, si bien qu'il existe une pluralité d'unités de communication mobiles (MSE) ayant un même code d'identification d'utilisateur, IMSI,
**caractérisé en ce que** le réseau comprend en outre
au moins un enregistreur auxiliaire dans lequel sont mémorisées des informations représentant le fait qu'un code d'identification d'utilisateur, IMSI, est mémorisé dans une pluralité de modules de mémoire (SIM) d'unités de communication mobiles (MSE), le nombre d'unités de communication d'une collection d'unités de communication ayant un même code d'identification d'utilisateur, IMSI, que comprend la collection et/ou qui sont activées, les enregistreurs VLR avec lesquels les unités de communication activées de la collection respective d'unités de communication sont enregistrées, les codes d'identification d'utilisateur, IMSI, et/ou les codes d'identification d'utilisateur temporaires, TMSI, associés aux unités de communication activées, l'emplacement (LA) associé à un enregistreur VLR dans lequel les unités de communication activées de la collection respective sont enregistrées, celle des unités de communication activées qui est joignable dans le système et un code d'identification d'unité de communication, IMEI, pour chaque unité de communication d'une collection, et
le réseau comprenant en outre un moyen, exploitable quand une unité de communication mobile (MSE) est désactivée, pour vérifier dans une étape a. en fonction de l'au moins un enregistreur auxiliaire qu'une unité de communication qui fait partie de l'une desdites collections a été désactivée ou non, ladite unité étant joignable dans le système avant cette désactivation, et que la collection respective comprend ou non une autre unité de communication qui est activée ;
un moyen pour exécuter dans une étape b. une procédure de reprise si le moyen de vérification à l'étape a. détermine qu'une unité de communication qui fait partie de l'une desdites collections et qui était joignable dans le réseau avant ladite désactivation a été désactivée ou non, et dans lequel, avant ladite désactivation, la collection respective comprend une autre unité de communication qui est activée, la procédure de reprise servant à garantir que l'une des unités de communication de la collection qui n'a pas été désactivée est maintenant joignable dans le réseau;
le réseau comprenant en outre, pour exécuter la procédure de reprise, un moyen de fourniture dans une étape c. d'une commande de fourniture de numéro d'itinérance, MAP PRN, à l'enregistreur VLR respectif pour enregistrer dans l'enregistreur VLR respectif dans lequel lesdites informations d'une unité de communication mobile peuvent être mémorisées que l'enregistreur VLR associé à l'unité de communication qui doit pouvoir être joignable n'a pas d'enregistrement dans lequel des informations relatives à l'unité de communication respective sont mémorisées ;
un moyen pour exécuter dans une étape d. une procédure d'actualisation d'emplacement de telle sorte qu'il soit enregistré dans l'enregistreur HLR que l'unité de communication respective qui doit pouvoir être joignable par le biais de l'enregistreur VLR respectif est joignable et de telle sorte que, dans l'enregistreur VLR, un enregistrement de l'unité de communication respective soit effectué avec des informations qui font en sorte que l'unité de communication respective soit maintenant joignable dans le réseau ;
dans lequel le réseau est agencé de telle sorte que la commande de fourniture de numéro d'itinérance, MAP PRN, de l'étape c. soit exécutée uniquement s'il a été mémorisé dans l'enregistreur auxiliaire que l'unité de communication mobile qui doit pouvoir être joignable, peut devenir joignable par le biais d'un enregistreur VLR différent de l'enregistreur VLR par le biais duquel l'unité de communication mobile qui a été désactivée était joignable.

2. Réseau selon la revendication 1, dans lequel le moyen d'exécution de la procédure d'actualisation d'emplacement comprend à
un moyen de mise en oeuvre dans une étape e. d'un radioappel de l'unité de communication respective qui doit pouvoir être joignable en fonction des informations relatives à l'emplacement (LA) actuel de l'unité de communication respective mémorisée dans la mémoire auxiliaire et en fonction des informations relatives au code d'identification d'utilisateur, IMSI et/ou au code d'identification d'utilisateur temporaire, TMSI, mémorisés dans la mémoire auxiliaire ;
un moyen d'exécution dans une étape f. après la mise en oeuvre du radioappel, d'une procédure de réallocation dans laquelle, un emplacement prédéterminé, LAIGLU, est fourni à l'unité de communication respective, puis mémorisé dans son module de mémoire (SIM) ;
dans lequel l'unité de communication respective est agencée pour recevoir dans une étape g. des informations relatives à son emplacement (LA) actuel depuis le réseau, détecter qu'il diffère de l'emplacement prédéterminé mémorisé, LAIFLU, et exécuter une requête d'actualisation d'emplacement de procédure standard en fonction de ladite détection, de telle sorte que l'enregistreur VLR respectif ainsi que l'enregistreur HLR soient actualisés avec des informations relatives à l'enregistreur VLR par le biais duquel l'unité de communication respective est joignable.

3. Réseau selon la revendication 2, dans lequel pour lancer le moyen de mise en oeuvre d'un radioappel le réseau comprend en outre un moyen d'émission dans une étape h., en fonction d'informations provenant de l'enregistrement auxiliaire, d'une requête spéciale de fourniture d'informations d'abonné, MAP PSI, à l'enregistreur VLR (VLR 1) par le biais duquel l'unité de communication (MSE 1) doit pouvoir être joignable, la requête spéciale comprenant des informations relatives à l'emplacement (LA) actuel de l'unité de communication respective (MSE 1), le code d'identification d'utilisateur, IMSI, et/ou le code d'identification temporaire, TMSI, de l'unité de communication respective (MSE) et l'emplacement prédéterminé pour une actualisation forcée, LAIFLU.

4. Réseau selon la revendication 2 ou 3, le réseau étant agencé de telle sorte que le radioappel soit également exécuté quand l'unité de communication respective est enregistrée comme n'étant pas joignable dans l'enregistreur VLR respectif.

5. Réseau selon l'une quelconque des revendications précédentes, dans lequel le système de réseau radio est doté d'une pluralité de contrôleurs de stations de base (BSC) qui sont connectés en vue de communiquer avec le centre de commutation de services mobiles (MSC) et une pluralité de stations émettrices/réceptrices de base (BTS) qui sont chacune connectées en vue de communiquer avec au moins l'un des contrôleurs de stations de base (BSC).

6. Réseau selon l'une quelconque des revendications 2 à 4 et selon la revendication 5, le réseau étant doté d'un moyen de transmission dans une étape e. d'un radioappel par les stations émettrices/réceptrices de base (BTS) qui sont associées à au moins un et même centre de commutation de services mobiles (MSC) ou enregistreur VLR.

7. Réseau selon l'une quelconque des revendications 2 à 4 et selon la revendication 5, le réseau étant doté d'un moyen de transmission dans une étape e. d'un radioappel par les stations émettrices/réceptrices de base (BTS) qui sont associées à l'enregistreur VLR par le biais duquel, conformément aux informations dans l'enregistreur auxiliaire, l'unité de communication mobile qui doit pouvoir être joignable peut être jointe.

8. Réseau selon l'une quelconque des revendications précédentes, dans lequel les unités de communication qui font partie de l'une desdites collections sont chacune dotées d'un module de mémoire spécial (SIM), une unité de communication dotée d'un tel module de mémoire spécial (SIM) transmettant un signal d'activation reconnaissable par le réseau quand l'unité de communication respective est activée.

9. Réseau selon la revendication 8, le réseau étant agencé de telle sorte qu'une unité de communication d'une collection d'unités de communication comprenant un même code d'identification d'utilisateur, IMSI, qui a été utilisée le plus récemment par un utilisateur pour transmettre des informations de l'utilisateur ou qui a été le plus récemment activée soit maintenant joignable ou quand elle est déjà joignable reste joignable dans le réseau par un moyen d'exécution d'une étape i., ledit moyen d'exécution d'une étape i. étant exploitable, quand l'une des autres unités de communication de la collection n'est pas joignable, pour exécuter une action différente d'une action selon laquelle des informations sont transmises par l'utilisateur, différente d'une action selon laquelle une unité de communication est activée et faisant en sorte que cette autre unité de communication devienne joignable à mauvais escient, alors que ladite unité de communication qui doit être joignable parce qu'elle a été activée le plus récemment ou parce qu'elle a été utilisée le plus récemment devient injoignable, pour exécuter l'étape c. et l'étape d. relativement à ladite unité de communication, de façon à faire en sorte que ladite unité de communication, qui devait rester joignable, soit joignable à nouveau.

10. Réseau selon la revendication 9, le réseau, en fonction des informations provenant de l'enregistreur auxiliaire, étant doté d'un moyen de détermination que l'étape i. doit être exécutée pour faire en sorte que l'unité de communication respective soit joignable.

11. Réseau selon la revendication 9 ou 10, dans lequel ledit moyen de fourniture d'une commande de fourniture de numéro d'itinérance, MAP PRN, et ledit moyen d'exécution d'une procédure d'actualisation d'emplacement sont exploitables dans l'exécution de l'étape i.

12. Réseau selon la revendication 11, le réseau étant agencé en outre relativement à l'exécution de l'étape i., de telle sorte que ledit moyen de fourniture d'une commande de fourniture de numéro d'itinérance, MAP PRN, ne soit exploitable que s'il a été mémorisé dans l'enregistreur auxiliaire que l'unité de communication mobile qui doit pouvoir être joignable, peut devenir joignable par le biais d'un enregistreur VLR différent de l'enregistreur VLR par le biais duquel l'unité de communication mobile qui a été désactivée était joignable.

13. Réseau selon la revendication 11 ou 12, dépendant de la revendication 2, dans lequel, dans l'exécution de l'étape i., ledit moyen de mise en oeuvre d'un radioappel et ledit moyen d'exécution d'une procédure de réallocation sont exploitables, et dans lequel l'unité de communication respective est agencée pour recevoir des informations relatives à son emplacement (LA) actuel depuis le réseau, détecter qu'il diffère de l'emplacement prédéterminé mémorisé, LAIFLU, et exécuter une requête d'actualisation d'emplacement de procédure standard en fonction de ladite détection, de telle sorte que l'enregistreur VLR respectif ainsi que l'enregistreur HLR soient actualisés avec des informations relatives à l'enregistreur VLR par le biais duquel l'unité de communication respective est joignable.

14. Réseau selon la revendication 13, dépendant de la revendication 3, dans lequel, pour lancer le moyen de mise en oeuvre d'un radioappel ledit moyen d'émission d'une requête spéciale est exploitable dans l'exécution de l'étape i.

15. Réseau selon l'une quelconque des revendications 13 ou 14, le réseau étant agencé, dans l'exécution de l'étape i., de telle sorte que le radioappel soit également exécuté quand l'unité de communication respective est enregistrée comme n'étant pas joignable dans l'enregistreur VLR respectif.

16. Réseau selon la revendication 5 et selon l'une quelconque des revendications 13 à 15, dans lequel ledit moyen de mise en oeuvre d'un radioappel comprend les stations émettrices/réceptrices de base (BTS) qui sont associées à au moins un et même centre de commutation de services mobiles (MSC) ou enregistreur VLR.

17. Réseau selon la revendication 5 et selon l'une quelconque des revendications 13 à 15, dans lequel ledit moyen de mis en oeuvre d'un radioappel comprend les stations émettrices/réceptrices de base (BTS) qui sont associées à l'enregistreur VLR par le biais duquel, conformément aux informations dans l'enregistreur auxiliaire, l'unité de communication mobile qui doit pouvoir être joignable peut être jointe.

18. Réseau selon l'une quelconque des revendications 8 à 17, dans lequel un signal d'activation est transmis selon lequel, dans son module de mémoire, l'unité de communication écrase les informations d'emplacement, LAI, avec des informations d'emplacement prédéterminé, LAIPO, ce qui est reconnue par le réseau comme un signal d'activation.

19. Réseau selon l'une quelconque des revendications 8 à 18, dans lequel le signal d'activation transmis se rapporte à l'identité d'emplacement local prédéterminé, LAIPO.

20. Réseau selon l'une quelconque des revendications 8 à 19, dans lequel, dans le réseau, en fonction du nombre de codes d'identification d'unités de communication, IMEI ou du nombre de codes d'identification d'utilisateurs temporaires, TMSI, le nombre d'unités de communication qui font partie d'une collection est déterminé.

21. Réseau selon l'une quelconque des revendications 8 à 20, dans lequel chaque module de mémoire local spécial (SIM) est agencé pour écraser une identité d'emplacement local (LA) effectif mémorisé dans le module avec le code d'identité d'emplacement local prédéterminé, LAIPO, pour la transmission du signal d'activation.

22. Réseau selon l'une quelconque des revendications précédentes, dans lequel sont mémorisées, dans l'enregistreur HLR, des informations relatives au centre de commutation de services mobiles (MSC) par le biais duquel une unité de communication mobile (MSE) pouvait être jointe le plus récemment.

23. Réseau selon la revendication 5, dans lequel, sont mémorisées, dans l'enregistreur VLR, des informations relatives au contrôleur de station de base (BSC) connecté à un centre de commutation de services mobiles (MSC) par le biais duquel une unité de communication mobile (MSE) activée peut être jointe.

24. Réseau selon la revendication 5, dans lequel, quand une unité de communication mobile (MSE) est activée, elle transmet son code d'identification d'utilisateur, IMSI, et/ou son code d'identification d'utilisateur temporaire, TMSI, le réseau mémorisant dans l'enregistreur VLR associé au centre de commutation de services mobiles (MSC) connecté au contrôleur de station de base (BSC) par le biais duquel le code d'identification d'utilisateur, facultativement temporaire, a été reçu, qu'une unité de communication (MSE) ayant le code d'identification d'utilisateur, facultativement temporaire, respectif, IMSI, TMSI, a été activée.

25. Réseau selon la revendication 24, dans lequel est également mémorisé dans l'enregistreur VLR le contrôleur de station de base (BSC), connecté à un centre de commutation de services mobiles (MSC), par le biais duquel l'unité de communication mobile (MSE) activée peut être jointe.

26. Réseau selon l'une quelconque des revendications précédentes, dans lequel une unité de communication mobile (MSE) activée transmet un signal à des points (relatifs) prédéterminés dans le temps pour indiquer dans le réseau qu'elle est toujours activée, et quand un tel signal est absent, le réseau indiquant dans l'enregistreur HLR que l'unité de communication (MSE) ayant le code d'identification d'utilisateur, IMSI, respectif, n'est plus activée et le réseau indiquant ou continuant d'indiquer dans l'enregistreur HLR que l'unité de communication mobile (MSE) ayant le code d'identification d'utilisateur respectif a effectivement été activée et est joignable quand le signal respectif est reçu.

27. Réseau selon l'une quelconque des revendications précédentes, dans lequel une unité de communication mobile (MSE) activée transmet un signal à des points, relatifs, prédéterminés dans le temps pour indiquer dans le réseau qu'elle est toujours activée, et quand un tel signal est absent pendant une période prédéterminée, le réseau indiquant dans l'enregistreur VLR dans lequel le code d'identification d'utilisateur, IMSI, respectif, et/ou le code d'identification d'utilisateur temporaire, TMSI a été indiqué comme étant associé à une unité de communication (MSE) que l'unité de communication (MSE) ayant le code d'identification d'utilisateur, IMSI, respectif, et/ou le code d'identification d'utilisateur temporaire, TMSI, n'est plus activée et le réseau indiquant ou continuant d'indiquer dans l'enregistreur VLR associé au centre de commutation de services mobiles (MSC) par le biais duquel le signal a été reçu que l'unité de communication mobile (MSE) ayant le code d'identification d'utilisateur, IMSI, et/ou le code d'identification d'utilisateur temporaire, TMSI, respectif, a effectivement été activée et est joignable quand le signal respectif est reçu.

28. Réseau selon l'une quelconque des revendications précédentes, dans lequel chaque centre de commutation de services mobiles (MSC) est doté d'un enregistreur VLR.

29. Réseau selon l'une quelconque des revendications précédentes, dans lequel au plus deux unités de communication mobiles (MSE) ayant un même code d'identification d'utilisateur, IMSI, sont présentes.

30. Réseau selon l'une quelconque des revendications précédentes, dans lequel, dans l'enregistreur auxiliaire, le nombre d'unités de communication d'une collection est mémorisé en mémorisant, pour chaque unité de communication de la collection, son code d'identification d'unité de communication, IMEI.

31. Réseau selon l'une quelconque des revendications précédentes, dans lequel l'au moins un enregistreur auxiliaire et l'enregistreur HL sont intégrés.
